# EUROPÄISCHE PATENTSCHRIFT

(11) **EP 3 827 183 B1**
(45) Veröffentlichungstag und Bekanntmachung des Hinweises auf die Patenterteilung: **29.06.2022**
(21) Anmeldenummer: 19742523.4
(22) Anmeldetag: 11.07.2019
(51) Int. Cl.: F16H 57/029, F16H 57/04

(54) **GETRIEBE UND VERFAHREN ZUM BETREIBEN EINES GETRIEBES**
TRANSMISSION AND METHOD FOR OPERATING A TRANSMISSION
BOÎTE DE VITESSES ET PROCÉDÉ POUR FAIRE FONCTIONNER UNE BOÎTE DE VITESSES

(30) Priorität: 24.07.2018 DE 102018005803
(43) Veröffentlichungstag der Anmeldung: 02.06.2021
(73) Patentinhaber: SEW-EURODRIVE GmbH & Co. KG, 76646 Bruchsal (DE)
(72) Erfinder: FREY, Marc, 75175 Pforzheim (DE); TRIEBSWETTER, Andreas, 76646 Bruchsal (DE)
(86) Internationale Anmeldenummer: PCT/EP2019/025229
(87) Internationale Veröffentlichungsnummer: WO 2020/020488

(56) Entgegenhaltungen:
- DE-A1-102008 023 289
- DE-A1-102016 012 501
- DE-B1- 1 958 024

## Beschreibung

Die Erfindung betrifft ein Getriebe und ein Verfahren zum Betreiben eines Getriebes.

Es ist allgemein bekannt, dass ein Getriebe bei einer Leckage Schmieröl verliert.

**Aus der** DE 1 958 024 B ist als nächstliegender Stand der Technik eine Einrichtung zur Überwachung von Lagern oder Getrieben in Schiffsantrieben bekannt.

Aus der JP H02- 085 521 A ist eine Anordnung zur Bestimmung der Temperatur von Lagern in einem Getriebe bekannt.

Aus der DE 10 2008 023 289 A1 ist ein Industriegetriebe bekannt.

Aus der US 6 425 293 A1 ist ein Sensorstecker bekannt.

Aus der DE 10 2008 023289 A1 ist ein Industriegetriebe bekannt.

Aus der DE 10 2016 012501 A1 ist ein Getriebe bekannt.

Der Erfindung liegt daher die Aufgabe zugrunde, ein Getriebe sicher zu betreiben.

Erfindungsgemäß wird die Aufgabe bei dem Getriebe nach den in Anspruch 1 angegebenen Merkmalen gelöst.

Von Vorteil ist dabei, dass das Schmieröl innerhalb der Gehäusetasche beruhigt wird und somit Fehlsignale durch Wellen nicht bewirkbar sind. Wenn jedoch bei einer Leckage der Ölstand dauerhaft sinkt, ist dies detektierbar. Die Gehäusetasche ist an der Innenseite des Getriebes ausgeformt. Somit breiten sich Wellen des Schmieröls nur schwer in den Bereich der Gehäusetasche aus. Sogar dann, wenn der Ölstand zwischen dem Sensor und dem oberen Rand der Gehäusetasche liegt, breiten sich Wellen nur schwer gedämpft in die Gehäusetasche aus, weil Luftvolumen in der Gehäusetasche durch einen Wellenberg eingeschlossen wird und sich infolge des horizontalen oberen Randes nur schwer ausbreiten kann.

Auf diese Weise ist also eine sichere Erkennung von Leckage ermöglicht und das Getriebe rechtzeitig stilllegbar, bevor die Schmierung der Verzahnteile ausfällt und somit bleibende Schäden am Getriebe auftreten.

Bei einer vorteilhaften Ausgestaltung ragt der Sensor durch eine Bohrung hindurch in die Gehäusetasche hinein,
wobei die Bohrung durch das Gehäuseteil hindurchgeht. Von Vorteil ist dabei, dass eine einfache Befestigung ausführbar ist. Außerdem ist die Bohrung infolge der verdünnten Wandstärke ohne großen Aufwand einbringbar.

Bei einer vorteilhaften Ausgestaltung ist der Sensor näher zum oberen Rand der Gehäusetasche als zum unteren Rand der Gehäusetasche angeordnet,
insbesondere wobei der Sensor einen Abstand zum oberen Rand der Gehäusetasche von weniger als 20 Millimeteraufweist,
insbesondere wobei der untere Rand der Gehäusetasche vom oberen Rand der Gehäusetasche mehr als 40 Millimeter entfernt ist, insbesondere aber weniger als 100 Millimeter. Von Vorteil ist dabei, dass anströmende Wellen des Schmieröls im Bereich zwischen dem Sensor und dem oberen Rand stark bedämpfbar sind.

Bei einer vorteilhaften Ausgestaltung betragen die äußeren Abmessungen des Getriebes zwischen 50 Zentimetern und fünf Metern. Von Vorteil ist dabei, dass ein industriell einsetzbares Getriebe verwendet wird.

Bei einer vorteilhaften Ausgestaltung ist die Wandstärke der Wandung des Gehäuseteils im Bereich der Gehäusetasche kleiner als im an diesen Bereich angrenzenden Bereich. Von Vorteil ist dabei, dass die Bohrung ohne großen Aufwand einbringbar ist. Außerdem muss äußere Oberfläche des Gehäuseteils im Bereich der Gehäusetasche nicht mit einer Auswölbung ausgeführt sein, sondern ist eben ausführbar, so dass der Bereich der Gehäusetasche von außen nicht erkennbar ist.

Bei einer vorteilhaften Ausgestaltung liegt der Ölstand, insbesondere Ölpegel, des Schmieröls im Normalbetrieb des Getriebes oberhalb des oberen Randes der Gehäusetasche. Von Vorteil ist dabei, dass das Signal des Sensors ungestört bleibt.

Bei einer vorteilhaften Ausgestaltung wird der Sensor nicht zur Bestimmung des Ölstandes, sondern zur Leckage verwendet. Von Vorteil ist dabei, dass nur bei dauerhaftem Ausbleiben von Öl eine Leckage detektiert wird.

Bei einer vorteilhaften Ausgestaltung nimmt die vertikale Höhe des oberen Randes mit abnehmender Entfernung zum Boden der Gehäusetasche hin zu
und/oder die Gehäusetasche weist am oberen Rand einen Hinterschnitt auf und/oder ist mit abnehmender Entfernung zur äußeren Oberfläche des Gehäuseteils hin aufgeweitet. Von Vorteil ist dabei, dass eine weiter verbesserte Bedämpfung von Wellen erreicht ist, da ein anströmender Wellenberg das Schmieröl nur schwer aus dem Hinterschnitt und/oder der Aufweitung herausfördern oder bei niedrigerem Ölstand hineinfördern kann.

Wichtige Merkmale bei dem Verfahren zum Betreiben eines Getriebes sind, dass der Sensor einen Raumbereich des Innenraums des Getriebes auf das Vorhandensein von Schmieröl überwacht,
wobei eine mit dem Sensor elektrisch verbundene Auswerteeinheit ein Warnsignal erzeugt, wenn der Sensor eine ununterbrochene Zeitspanne lang kein Schmieröl detektiert.

Von Vorteil ist dabei, dass nur bei Leckage ein Warnsignal erzeugt wird und somit Störungen vermeidbar sind.

Bei einer vorteilhaften Ausgestaltung wird der Sensor zur Bestimmung von Leckage des Getriebes verwendet, insbesondere nicht aber zur Bestimmung des Ölstandes. Von Vorteil ist dabei, dass eine sichere Bestimmung von Leckage ermöglicht ist, indem eine entsprechend lange Mindestzeit das Fehlen von Schmieröl detektiert werden muss. Allerdings ist kein Ölstand auf diese Weise bestimmbar, da die Wellenbewegung während des Betriebs die Bestimmung erschwerten würde

Bei einer vorteilhaften Ausgestaltung ist der Raumbereich in einer in ein Gehäuseteil des Getriebes eingeformten Gehäusetasche angeordnet. Von Vorteil ist dabei, dass der empfindliche Bereich des Sensors, also derjenige Raumbereich, in welchem das Schmieröl detektierbar ist, beruhigt ist, also Wellen sich in die Gehäusetasche hinein nur erschwert ausbreiten können.

Bei einer vorteilhaften Ausgestaltung ist die Zeitspanne mehr als fünf Sekunden lang. Von Vorteil ist dabei, dass kurzzeitiges Verschwinden von Schmieröl aus dem empfindlichen Bereich des Sensors diskriminiert wird und nur länger andauerndes Fehlen von Schmieröl und somit eine Leckage eindeutig erkannt wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von schematischen Abbildungen näher erläutert:
In der Figur 1 ist ein Querschnitt durch einen Teil eines Getriebes dargestellt, wobei der Ölstand 3 ausreichend ist und/oder den Sensor 2 vollständig bedeckt.

In der Figur 2 ist im Unterschied zu Figur 1 ein niedrigerer Ölstand 3 vorhanden, so dass der Sensor 2 nur teilweise vom Schmieröl bedeckt ist.

In der Figur 3 ist im Unterschied zur Figur 1 und Figur 2 ein derart niedriger Ölstand vorhanden, dass der Ölstand 3 unterhalb des Sensors ist.

Wie in den Figuren dargestellt, weist das Getriebe ein Gehäuseteil 1 auf, welches einen zumindest teilweise mit Schmieröl 3 teilweise befüllten Innenraum des Getriebes zumindest teilweise gehäusebildend umgibt

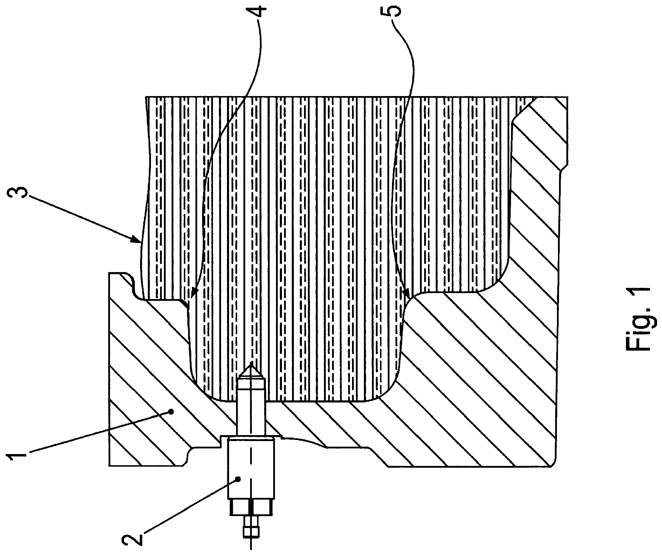

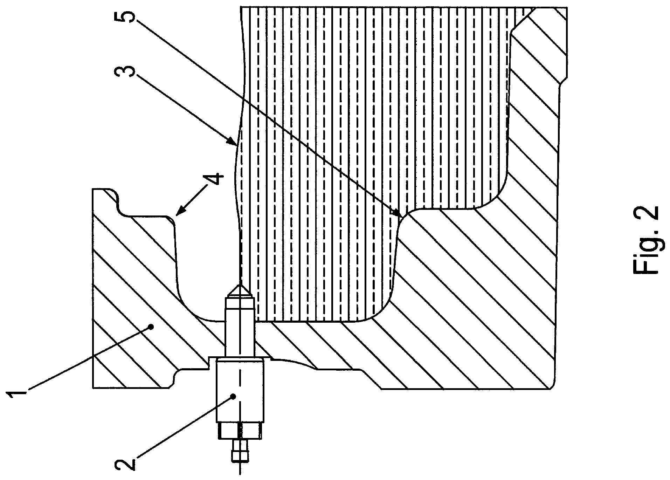

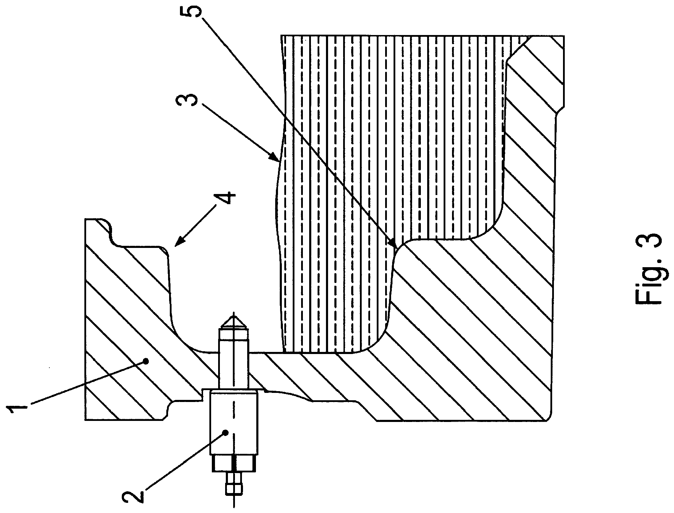

Bei einer Leckage nimmt der Ölstand ab, wobei Figur 1 bis Figur 3 dies als zeitlich nacheinander folgende Zustände veranschaulicht.

Am Gehäuseteil 1 ist eine Gehäusetasche ausgeformt, welche als zur äußeren Umgebung hin gerichtete Auswölbung des Innenraums des Getriebes ausgeformt ist. Diese Auswölbung bewirkt somit eine Verringerung der Wandstärke des Gehäuseteils 1. Wegen der verdünnten Wandstärke ist ein Sensor 2 in einer Durchgangsbohrung des Gehäuseteils 1 in einfacher Weise anordenbar.

Die die Gehäusetasche bildende, in die Wandung hinein gerichtete Auswölbung des Innenraums ist zwischen einem unteren Rand 5 und einem oberen Rand 4 der Gehäusetasche angeordnet.

Das Getriebe ist derart auf einer Maschine anordenbar, dass die Fußfläche, insbesondere also der Boden, einen zeitabhängigen Neigungswinkel aufweist. Vorzugsweise schwankt der Neigungswinkel dabei um maximal 20°, insbesondere ist also betragsmäßig maximal 10° gegen die Horizontale geneigt.

Der Sensor detektiert das Nichtvorhandensein von Schmieröl an seiner Oberfläche zwar sehr schnell und erzeugt auch ein entsprechendes Sensorsignal, das einer Auswerteeinheit zugeführt wird, jedoch muss dieses Signal eine Mindestzeit, insbesondere mehr als fünf Sekunden, anliegen, damit die Auswerteeinheit einen Fehler, nämlich Leckage des Getriebes, anzeigt und/oder weitermeldet.

Die Mindestzeit unterdrückt somit kurzzeitigen Ölmangel im Bereich des Sensors 2, wenn dieser Ölmangel durch Wellenbildung und/oder Schaumbildung während Betrieb des Getriebes entsteht.

Im Normalbetrieb, also bei Nichtvorhandensein einer Ölleckage ist der Ölstand des Schmieröls unabhängig vom bei Betrieb erreichten Neigungswinkel oberhalb des oberen Randes 4 der Gehäusetasche.

Wenn eine Welle mit großer Amplitude dann in Richtung der Gehäusetasche sich ausbreitet, wird sie von der Gehäusetasche stark abgedämpft, weil sie sich in die Gehäusetasche hinein nur schwer ausbreiten kann. Beispielsweise muss bei Abfließen von Schmieröl aus der Gehäusetasche Luft in den von der Welle entleerten Bereich dieser Gehäusetasche einströmen. Beim Entleeren des Bereichs muss anfänglich der Ansaugdruck des Vakuums überwunden werden.

Bei einer Leckage hingegen ist der Ölstand dauerhaft ab. Sobald der durchschnittliche Ölstand den oberen Rand 4 der Gehäusetasche unterschreitet und somit im Bereich der Gehäusetasche angeordnet ist, können Wellen nur schwer in die Gehäusetasche eindringen, da der Wellenberg bei Berührung des oberen Randes 4 Luft in der Gehäusetasche einschließt und diese so entstandene Luftblase nur langsam unter Überwindung erheblicher Reibung aus der Gehäusetasche herausfließt. Somit wird auch bei Absinken infolge einer Leckage während des Betriebs des Getriebes der Ölpegel beruhigt.

Da also die Gehäusetasche somit Wellen bedämpft, ist es vorteilhaft, den Sensor 2 am Boden der Gehäusetasche anzuordnen oder den Sensor durch die durch die Gehäusewand des Gehäuseteils durchgehende Bohrung hindurch in die Gehäusetasche nur geringfügig hervorragen zu lassen.

Im Ausführungsbeispiel weist die Gehäusetasche eine Tiefe von 40 Millimetern auf und der Sensor 2 ragt 15 Millimeter in die Gehäusetasche hinein, insbesondere also weniger als die Hälfte der Tiefe.

Der Sensor 2 ist außerdem näher zum oberen Rand 4 als zum unteren Rand 5 angeordnet. Auf diese Weise ist der oben genannte Effekt besonders gut wirksam. Denn die Entleerung des Bereichs der Gehäusetasche muss den Ansaugdruck des Vakuums überwinden.

Wäre der Sensor tiefer angeordnet, würden nur noch sehr große Wellenberge wesentlich abgedämpft, welche den oberen Rand 4 berühren.

Je tiefer somit der Ölpegel ist, desto geringer ist also die ,Abdämpfung.

Je höher der Ölstand ist, desto größer sind Gewicht und Kosten des hergestellten Getriebes

Somit ist also wichtig, dass der Ölstand des Getriebes nur wenig über dem oberen Rand 4 liegt, wenn das Getriebe in der für den Betrieb vorgesehenen Weise befüllt ist und keine Leckage wirksam ist.

Das Getriebe weist charakteristische äußere Abmessungen, insbesondere Länge, Tiefe und Höhe auf, die jeweils einen Betrag zwischen 50 Zentimetern und 5 Metern aufweisen.

### Bezugszeichenliste

1 Gehäuseteil
2 Sensor
3 Schmieröl
4 oberer Rand der Gehäusetasche
5 unterer Rand der Gehäusetasche

## Patentansprüche

1. Getriebe mit Gehäuseteil (1) und Schmieröl (3),
**wobei** am Gehäuseteil (1) eine Gehäusetasche ausgeformt ist,
wobei ein Sensor (2) in die Gehäusetasche zumindest teilweise hineinragt, wobei **der Sensor (2) durch eine Bohrung hindurch in die Gehäusetasche hineinragt,**
**wobei die Bohrung durch das Gehäuseteil (1) hindurchgeht,**
**wobei der Sensor (2) näher** zu einem **oberen Rand (4) der Gehäusetasche als zu einem unteren Rand (5) der Gehäusetasche angeordnet ist,**
**dadurch gekennzeichnet, dass**
**die Wandstärke der Wandung des Gehäuseteils (1) im Bereich der Gehäusetasche kleiner ist als im an diesen Bereich angrenzenden Bereich, wobei der Ölstand, insbesondere Ölpegel, des Schmieröls (3) im Normalbetrieb des Getriebes oberhalb des oberen Randes (4) der Gehäusetasche liegt.**

2. Getriebe nach Anspruch 1,
**dadurch gekennzeichnet, dass**
der Sensor (2) durch eine Bohrung hindurch in die Gehäusetasche hineinragt,
wobei die Bohrung durch das Gehäuseteil (1) hindurchgeht.

3. Getriebe nach mindestens einem der vorangegangenen Ansprüche,
**dadurch gekennzeichnet, dass**
der Sensor (2) näher zum oberen Rand (4) der Gehäusetasche als zum unteren Rand (5) der Gehäusetasche angeordnet ist.

4. **Getriebe nach Anspruch 3,**
**dadurch gekennzeichnet, dass**
der Sensor (2) einen Abstand zum oberen Rand (4) der Gehäusetasche von weniger als 20 Millimeteraufweist.

5. **Getriebe nach Anspruch 3 oder 4,**
**dadurch gekennzeichnet, dass**
der untere Rand (5) der Gehäusetasche vom oberen Rand (4) der Gehäusetasche mehr als 40 Millimeter entfernt ist,

6. Getriebe nach mindestens einem der vorangegangenen Ansprüche,
**dadurch gekennzeichnet, dass**
der Sensor (2) nicht zur Bestimmung des Ölstandes, sondern zur **Bestimmung einer** Leckage verwendet wird.

7. Getriebe nach mindestens einem der vorangegangenen Ansprüche,
**dadurch gekennzeichnet, dass**
die vertikale Höhe des oberen Randes (4) mit abnehmender Entfernung zum Boden der Gehäusetasche hinzunimmt.

8. Getriebe nach mindestens einem der vorangegangenen Ansprüche,
**dadurch gekennzeichnet, dass**
die Gehäusetasche am oberen Rand (4) einen Hinterschnitt aufweist und/oder eine mit abnehmender Entfernung zur äußeren Oberfläche des Gehäuseteils (1) hin aufgeweitet ist.

9. Verfahren zum Betreiben eines Getriebes, nach mindestens einem der vorangegangenen Ansprüche,
**dadurch gekennzeichnet, dass**
der Sensor (2) einen Raumbereich des Innenraums des Getriebes auf das Vorhandensein von Schmieröl (3) überwacht,
wobei eine mit dem Sensor (2) elektrisch verbundene Auswerteeinheit ein Warnsignal erzeugt, wenn der Sensor (2) eine ununterbrochene Zeitspanne lang kein Schmieröl (3) detektiert.

10. Verfahren nach Anspruch 9,
**dadurch gekennzeichnet, dass**
der Sensor (2) zur Bestimmung von Leckage des Getriebes verwendet wird,

11. Verfahren nach Anspruch 9 oder 10,
**dadurch gekennzeichnet, dass**
der Raumbereich in einer in einem Gehäuseteil (1) des Getriebes eingeformten Gehäusetasche angeordnet ist.

## Claims

1. Gearing comprising a housing part (1) and lubricating oil (3),
a housing cavity being formed on the housing part (1),
a sensor (2) protruding into the housing cavity at least in part, the sensor (2) protruding into the housing cavity through a bore, the bore passing through the housing part (1), the sensor (2) being arranged closer to a top edge (4) of the housing cavity than a bottom edge (5) of the housing cavity,
**characterised in that**
the wall thickness of the wall of the housing part (1) in the region of the housing cavity is less than in the region adjoining that region, the oil state, in particular the oil level, of the lubricating oil (3) being above the top edge (4) of the housing cavity during normal operation of the gearing.

2. Gearing according to claim 1,
**characterised in that**
the sensor (2) protrudes into the housing cavity through a bore,
the bore passing through the housing part (1).

3. Gearing according to at least one of the preceding claims,
**characterised in that**
the sensor (2) is arranged closer to the top edge (4) of the housing cavity than the bottom edge (5) of the housing cavity.

4. Gearing according to claim 3,
**characterised in that**
the sensor (2) is at a distance of less than 20 millimetres from the top edge (4) of the housing cavity.

5. Gearing according to either claim 3 or claim 4,
**characterised in that**
the bottom edge (5) of the housing cavity is more than 40 millimetres away from the top edge (4) of the housing cavity.

6. Gearing according to at least one of the preceding claims,
**characterised in that**
the sensor (2) is used not to determine the oil state but rather to determine a leak.

7. Gearing according to at least one of the preceding claims,
**characterised in that**
the vertical height of the top edge (4) increases as the distance from the bottom of the housing cavity decreases.

8. Gearing according to at least one of the preceding claims,
**characterised in that**
the housing cavity has an undercut at the top edge (4) and/or is widened as the distance from the exterior surface of the housing part (1) decreases.

9. Method for operating a gearing according to at least one of the preceding claims, **characterised in that**
the sensor (2) monitors a spatial region of the interior of the gearing for the presence of lubricating oil (3),
an evaluation unit electrically connected to the sensor (2) generating a warning signal when the sensor (2) detects no lubricating oil (3) for an uninterrupted period of time.

10. Method according to claim 9,
**characterised in that**
the sensor (2) is used to determine a leak from the gearing.

11. Method according to either claim 9 or claim 10,
**characterised in that**
the spatial region is arranged in a housing cavity that is moulded in a housing part (1) of the gearing.

## Revendications

1. Transmission comprenant une partie (1) formant carter, et de l'huile de lubrification (3),
une cavité étant ménagée sur ladite partie (1) formant carter,
sachant qu'un capteur (2) s'engage au moins partiellement dans la cavité du carter,
lequel capteur (2) s'engage dans ladite cavité du carter en traversant un alésage de part en part,
lequel alésage parcourt intégralement la partie (1) formant carter,
ledit capteur (2) étant plus rapproché d'un bord supérieur (4) de la cavité du carter que d'un bord inférieur (5) de ladite cavité du carter,
**caractérisée par le fait que**
l'épaisseur de la paroi de la partie (1) formant carter est plus petite, dans la région de la cavité du carter, que dans la région limitrophe de cette région,
sachant que le niveau, notamment la hauteur de l'huile de lubrification (3) se situe, en service normal de la transmission, au-dessus du bord supérieur (4) de ladite cavité du carter.

2. Transmission selon la revendication 1,
**caractérisée par le fait que**
le capteur (2) s'engage dans la cavité du carter en traversant un alésage de part en part, lequel alésage parcourt intégralement la partie (1) formant carter.

3. Transmission selon au moins l'une des revendications précédentes, **caractérisée par le fait que**
le capteur (2) est plus rapproché du bord supérieur (4) de la cavité du carter que du bord inférieur (5) de ladite cavité du carter.

4. Transmission selon la revendication 3,
**caractérisée par le fait que**
le capteur (2) se trouve à une distance de moins de 20 millimètres du bord supérieur (4) de la cavité du carter.

5. Transmission selon la revendication 3 ou 4,
**caractérisée par le fait que**
le bord inférieur (5) de la cavité du carter est éloigné de plus de 40 millimètres du bord supérieur (4) de ladite cavité du carter.

6. Transmission selon au moins l'une des revendications précédentes, **caractérisée par le fait que**
le capteur (2) est utilisé non pas pour déterminer le niveau de l'huile, mais pour déterminer une fuite.

7. Transmission selon au moins l'une des revendications précédentes, **caractérisée par le fait que**
la hauteur verticale du bord supérieur (4) croît, en direction du fond de la cavité du carter, au fur et à mesure de la décroissance de l'éloignement.

8. Transmission selon au moins l'une des revendications précédentes, **caractérisée par le fait que**
la cavité du carter est munie d'une contre-dépouille sur le bord supérieur (4) et/ou est évasée, au fur et à mesure de la décroissance de l'éloignement, en direction de la surface extérieure de la partie (1) formant carter.

9. Procédé d'actionnement d'une transmission conforme à au moins l'une des revendications précédentes,
**caractérisé par le fait que**
le capteur (2) surveille la présence d'huile de lubrification (3) dans une zone spatiale de l'espace interne de ladite transmission,
sachant qu'une unité d'évaluation, raccordée électriquement audit capteur (2), engendre un signal d'alerte lorsque ledit capteur (2) ne détecte aucune huile de lubrification (3) durant une période ininterrompue.

10. Procédé selon la revendication 9,
**caractérisé par le fait que**
le capteur (2) est utilisé pour déterminer une fuite de la transmission.

11. Procédé selon la revendication 9 ou 10,
**caractérisé par le fait que**
la zone spatiale est située dans une cavité ménagée dans une partie (1) formant carter de la transmission.
